# DEMANDE DE BREVET EUROPEEN

(11) **EP 1 120 964 A1**
(43) Date de publication de la demande: **01.08.2001**
(21) Numéro de dépôt: 01400182.0
(22) Date de dépôt: 23.01.2001
(51) Int. Cl.: H04N 7/16

(54) **Système de contrôle d'accès d'un utilisateur à des programmes vidéos, transcodeur, décodeur et procédé de contrôle d'accès d'un tel système**

(30) Priorité: 25.01.2000 FR 0000904
(71) Demandeur: Tonna Electronique, 51100 Reims (FR)
(72) Inventeur: Korähnke, Gérard, 57365 Ennery (FR)
(74) Mandataire: Texier, Christian

(57) **Abrégé**

La présente invention concerne un système de contrôle d'accès à des programmes vidéo visionnés sur un dispositif de visualisation (6), comprenant :
- un système de gestion (10) pour contrôler l'accès à au moins un programme vidéo, apte à définir la valeur d'un champ d'identification de services, cette valeur indiquant si l'utilisateur est autorisé à accéder à ce programme, en fonction de services sélectionnés par l'utilisateur,
- un transcodeur (2) pour insérer des informations dans un signal vidéo correspondant à un programme faisant l'objet d'un accès conditionnel, ces informations comportant le champ d'identification de services, et pour émettre le signal vidéo porteur des informations, et
- un décodeur (4) pour extraire, du signal vidéo porteur des informations et émis par le transcodeur (2), la valeur du champ d'identification de services, et pour contrôler la visualisation du programme, sur le dispositif de visualisation (6) du signal vidéo, en fonction de cette valeur.

## Description

La présente invention concerne le domaine des systèmes et procédés de contrôle d'accès, d'un utilisateur, à la visualisation de programmes vidéos sur un dispositif de visualisation.

Plus particulièrement, il peut s'agir de systèmes et procédés pour contrôler l'accès d'usagers de collectivités, tels que des hôtels, des hôpitaux, etc., à des programmes télévisuels ou vidéo, visualisés sur des téléviseurs.

Certaines collectivités offrent en effet à leurs usagers, la possibilité de bénéficier d'un accès à des programmes de télévision. Cette offre est souvent globale et son prix est intégré dans un forfait journalier. Les gérants de ces collectivités peuvent être amenés, pour satisfaire les besoins des usagers, à proposer plusieurs niveaux de services à des tarifs différents, ou encore à un tarif qui est fonction du temps d'utilisation, ou fonction des programmes effectivement regardés, etc. La gestion de l'accès à ces services peut se faire par des procédés de cryptage de l'information. Ceux-ci sont aujourd'hui largement utilisés en diffusion directe par satellite ou sur des réseaux câblés, ou bien encore en diffusion via des dispositifs d'autorisation de réception et de visualisation de signaux de télévision. Dans ce dernier cas, le système utilise une voie de retour communiquant avec une unité de gestion qui autorise ou non la visualisation du programme. Cette voie de retour peut être réalisée à l'aide d'une paire bifilaire spécifique ou d'un modem radiofréquence bidirectionnel utilisant le câble coaxial de distribution des programmes de télévision. Ces systèmes sont souvent complexes et leur coût d'installation est relativement élevé.

Un but de la présente invention est de fournir un système et un procédé de contrôle d'accès à des programmes vidéos, simples et dont l'installation est économique.

Ce but est atteint, selon l'invention, grâce à un système de contrôle d'accès, d'un utilisateur, à des programmes vidéo non cryptés visionnés sur un dispositif de visualisation, caractérisé par le fait qu'il comprend :
- un système de gestion pour contrôler l'accès à au moins un programme vidéo, apte à définir la valeur d'un champ d'identification de services, cette valeur indiquant si l'utilisateur est autorisé à accéder à ce programme, en fonction de services sélectionnés par l'utilisateur,
- un transcodeur comprenant des moyens d'insertion pour insérer des informations dans un signal vidéo correspondant à un programme faisant l'objet d'un accès conditionnel, ces informations comportant le champ d'identification de services et ce transcodeur comportant également des moyens d'émission pour émettre le signal vidéo porteur des informations, et
- un décodeur comprenant des moyens de décodage pour extraire, du signal vidéo porteur des informations et émis par le transcodeur, la valeur du champ d'identification de services, et des moyens de commande pour contrôler la visualisation du programme, sur le dispositif de visualisation du signal vidéo, en fonction de cette valeur.

Grâce au système selon l'invention, un champ d'identification de services, c'est-à-dire un champ de données spécifiant si un programme est accessible à un utilisateur, est inséré dans le signal vidéo de ce programme et c'est la valeur du champ d'identification de services, lue par un décodeur, qui indique si l'accès à ce programme est autorisé ou non. Si l'accès n'est pas autorisé, des moyens de commande interrompent la visualisation du programme concerné. Ceci permet de s'affranchir d'un cryptage du signal vidéo du programme soumis à un accès conditionnel. Ce système ne requiert pas l'installation d'une paire bifilaire spécifique ou l'utilisation d'un modem radiofréquence bidirectionnel. Le système selon l'invention se connecte sur le réseau de diffusion existant, sans nécessiter de modification de ce dernier.

Le système de contrôle d'accès selon l'invention présente avantageusement les caractéristiques facultatives, mais non limitatives, suivantes, prises séparément ou en combinaison :
- il comprend un système de gestion du contrôle de l'accès à au moins un programme vidéo, apte à définir la valeur du champ d'identification de services, en fonction des services sélectionnés par l'utilisateur ; ce système de gestion du contrôle d'accès comporte, par exemple, un ordinateur équipé d'un modem téléphonique ou d'un serveur vocal pour indiquer, par téléphone, à l'utilisateur comment opérer ces sélections parmi les services proposés et mémoriser ces sélections ;
- il comprend des moyens d'entrée pour plusieurs signaux vidéos ; les moyens d'insertion sont alors aptes à insérer, dans chaque signal vidéo, des informations comportant un champ d'identification de services dont la valeur indique si l'utilisateur est autorisé à accéder au programme correspondant à ce signal vidéo ;
- il comporte des moyens de modulation du signal, pour moduler chaque signal vidéo porteur des informations, en sortie des moyens d'insertion ;
- il comporte des moyens de multiplexage, pour regrouper les signaux vidéos modulés grâce aux moyens de modulation, les signaux vidéos regroupés par les moyens de multiplexage sont alors transmis, par un réseau, à au moins un utilisateur disposant d'un décodeur ;
- les moyens d'insertion sont aptes à insérer des informations comportant en outre un champ d'adresse, pour associer un champ d'identification de services à un utilisateur déterminé ;
- il comprend plusieurs décodeurs, chaque décodeur étant associé à une adresse d'utilisateur ;
- il comporte des moyens de génération d'une tension aptes à interrompre, par l'intermédiaire d'un circuit électronique de commutation et de traitement de signaux, associé à une prise péritélévision montée sur le dispositif de visualisation, la visualisation du programme si l'accès à celui n'est pas autorisé.

Selon un autre aspect, l'invention concerne un transcodeur destiné à être utilisé dans le système de contrôle d'accès décrit précédemment, il comprend alors :
- un système de gestion pour contrôler l'accès à au moins un programme vidéo, apte à définir la valeur d'un champ d'identification de services, cette valeur indiquant si l'utilisateur est autorisé à accéder à ce programme, en fonction de services sélectionnés par l'utilisateur,
- des moyens d'insertion pour insérer des informations dans un signal vidéo correspondant à un programme faisant l'objet d'un accès conditionnel, ces informations comportant le champ d'identification de services et ces informations étant aptes à être décodées, par des moyens de décodage aptes à extraire, du signal vidéo porteur de ces informations, la valeur du champ d'identification de services, et
- des moyens d'émission pour émettre le signal vidéo porteur des informations vers les moyens de décodage.

Ce transcodeur présente avantageusement les caractéristiques facultatives, mais non limitatives, suivantes, prises séparément ou en combinaison :
- il comprend un système de gestion du contrôle de l'accès à au moins un programme vidéo, apte à définir la valeur du champ d'identification de services, en fonction des services sélectionnés par l'utilisateur ; ce système de gestion du contrôle d'accès comporte alors avantageusement un microprocesseur, un modem téléphonique et un serveur vocal, pour indiquer, par téléphone, à l'utilisateur comment opérer sa sélection parmi les services proposés, et mémoriser cette sélection ; ce système de gestion du contrôle d'accès peut également avantageusement comporter des moyens d'entrée pour plusieurs signaux vidéos ;
- les moyens d'insertion sont aptes à insérer, dans chaque signal vidéo, des informations comportant un champ d'identification de services dont la valeur indique si l'utilisateur est autorisé à accéder au programme correspondant à ce signal vidéo ;
- il comporte des moyens de modulation de signal, pour moduler chaque signal vidéo porteur des informations, en sortie des moyens d'insertion ;
- il comporte des moyens de multiplexage, pour regrouper les signaux vidéo modulés grâce aux moyens de modulation ;
- les signaux vidéos regroupés par les moyens de multiplexage sont alors transmis par un réseau à au moins un utilisateur disposant d'un décodeur ;
- les moyens d'insertion sont aptes à insérer des informations comportant en outre un champ d'adresse, pour associer un champ d'identification de services à un utilisateur déterminé ;
- il est apte à insérer les informations, dans les espaces de la trame des images du signal vidéo, qui correspondent aux lignes non utilisées pour la visualisation des images.

Selon encore un autre aspect, l'invention concerne un décodeur destiné à être utilisé dans le système de contrôle d'accès décrit ci-dessus. Ce décodeur comprend :
- des moyens de décodage pour extraire, d'un signal vidéo porteur d'informations comportant un champ d'identification de services défini en fonction de services sélectionnés par l'utilisateur grâce à un système de gestion permettant de contrôler l'accès à au moins un programme vidéo et ce champ d'identification de service ayant une valeur indiquant si l'utilisateur est autorisé à accéder à un programme faisant l'objet d'un accès conditionnel, cette valeur du champ d'identification de services, et
- des moyens de commande pour contrôler la visualisation du programme, sur le dispositif de visualisation du signal vidéo, en fonction de cette valeur.

Ce décodeur possède alors avantageusement les caractéristiques facultatives, mais non limitatives, suivantes, prises séparément ou en combinaison :
- les moyens de commande comprennent des moyens générateurs de tension pour produire une tension apte à interrompre, par l'intermédiaire d'un circuit électronique de commutation et de traitement de signaux associé à une prise péritélévision montée sur le dispositif de visualisation, la visualisation du programme si l'accès à celui-ci n'est pas autorisé ;
- les moyens de commande sont électriquement reliés à un connecteur apte à être branché sur la broche numéro huit d'une prise péritélévision montée sur le dispositif de visualisation.

Selon encore un autre aspect, l'invention concerne un procédé de mise en oeuvre du système de contrôle d'accès décrit précédemment. Ce procédé comprend :
- une étape consistant à définir un champ d'identification de services, dont la valeur indique si l'utilisateur est autorisé à accéder à ce programme, grâce à un système de gestion permettant de contrôler l'accès à au moins un programme vidéo, en fonction des services sélectionnés par l'utilisateur,
- une étape d'insertion d'informations dans un signal vidéo correspondant à un programme faisant l'objet d'un accès conditionnel, ces informations comportant le champ d'identification de services,
- une étape d'émission du signal vidéo porteur des informations,
- une étape de décodage du signal vidéo porteur, pour extraire de ce signal, la valeur du champ d'identification de services, et
- une étape de commande pour contrôler la visualisation du programme, sur le dispositif de visualisation du signal vidéo, en fonction de cette valeur.

Avantageusement, le procédé selon l'invention comporte alors les caractéristiques facultatives, mais non limitatives, suivantes, prises séparément ou en combinaison :
- l'insertion d'informations est réalisée dans les espaces de la trame des images du signal vidéo, qui correspondent aux lignes non utilisées pour la définition des images ;
- l'insertion d'informations est réalisée dans un signal destiné normalement à la transmission de données de télétexte ;
- il comporte une étape consistant à insérer, dans le signal vidéo, avec le champ d'identification de services, un champ d'adresse, pour associer le champ d'identification de services à un utilisateur déterminé;
- il comporte une étape consistant à comparer la valeur du champ d'identification de services à des données sur le programme en cours de visualisation, pour déterminer si sa visualisation est autorisée ;
- il comporte une étape consistant à produire une tension apte à interrompre, par l'intermédiaire d'un circuit électronique de commutation et de traitement de signaux associés à une prise péritélévision montée sur le dispositif de visualisation, la visualisation du programme si l'accès à celui-ci n'est pas autorisé.

D'autres aspects, buts et avantages de l'invention apparaîtront à la lecture de la description détaillée qui suit. L'invention sera également mieux comprise à l'aide des références aux dessins sur lesquels :

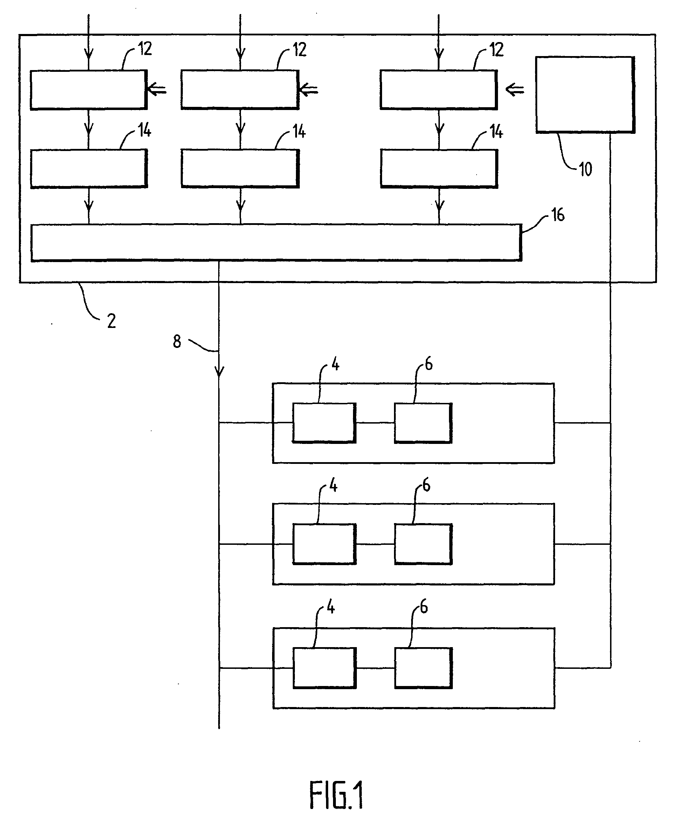

- la figure 1 représente schématiquement un système de contrôle d'accès à des programmes vidéos, conforme à la présente invention ;
- la figure 2 représente schématiquement certaines fonctions du décodeur entrant dans la composition du système représenté sur la figure 1 ;
- la figure 3 représente l'évolution temporelle des trames paires et impaires d'une image d'un signal vidéo correspondant à un programme dont l'accès peut être contrôlé par le système et le décodeur respectivement représentés sur les figures 1 et 2 ; et
- la figure 4 représente schématiquement la zone d'insertion des informations comportant un champ d'identification de services et un champ d'adresse, dans les trames d'un signal vidéo telles que celles représentées sur la figure 3.

Un exemple de système de contrôle d'accès 1, conforme à l'invention, est décrit ci-dessous de manière détaillée. Ce système de contrôle d'accès 1 est par exemple installé sur le réseau de diffusion de programmes vidéos et télévisés d'une collectivité. Cette collectivité offre à ses usagers la possibilité de visualiser dans leur chambre, des programmes télévisuels normalement librement accessibles au public (par exemple diffusés par des chaînes du service publique), des programmes télévisuels normalement accessibles au public seulement avec un abonnement (par exemple des programmes passant par un système de diffusion par câble ou par satellite), des programmes vidéo préenregistrés diffusés de manière interne à la collectivité, par un appareil de lecture automatique, etc. L'accès à certains de ces programmes est conditionné par le paiement d'une contrepartie financière.

Selon cet exemple, le système de contrôle d'accès 1 comporte un transcodeur 2, plusieurs décodeurs 4, un dispositif de visualisation 6 associé à chaque décodeur 4, ainsi qu'un réseau 8 reliant le transcodeur 2 aux décodeurs 4 et aux dispositifs de visualisation 6.

Le transcodeur 4 comprend un système de gestion 10 du contrôle de l'accès au programme, des moyens d'insertion 12 d'informations dans un signal vidéo, des moyens de modulation 14, ainsi que des moyens de multiplexage 16.

Le système de gestion 10 du contrôle d'accès aux programmes vidéo se présente, par exemple, sous la forme d'un micro-ordinateur, équipé d'une carte modem téléphonique et d'un serveur vocal permettant de délivrer les instructions nécessaires à l'usager pour que celui-ci accède aux services de diffusion de programmes vidéo offerts par la collectivité et fasse son choix parmi ces services.

On prévoit des moyens d'insertion 12 pour chaque programme faisant l'objet d'un accès conditionnel. Ces moyens d'insertion 12 comporte des moyens d'entrée pour chaque signal vidéo correspondant à chaque programme faisant l'objet d'un accès conditionnel.

Les moyens de modulation 14 et les moyens de multiplexage 16 correspondent à des modes de réalisation déjà connus pour ce type de moyens.

Le réseau 8 se compose d'un réseau téléphonique et d'un réseau de télédistribution. Ces réseaux téléphonique et de télédistribution sont avantageusement ceux déjà existant dans la collectivité. L'installation du système conforme à la présente invention ne nécessite donc pas de lourds investissements au niveau des infrastructures.

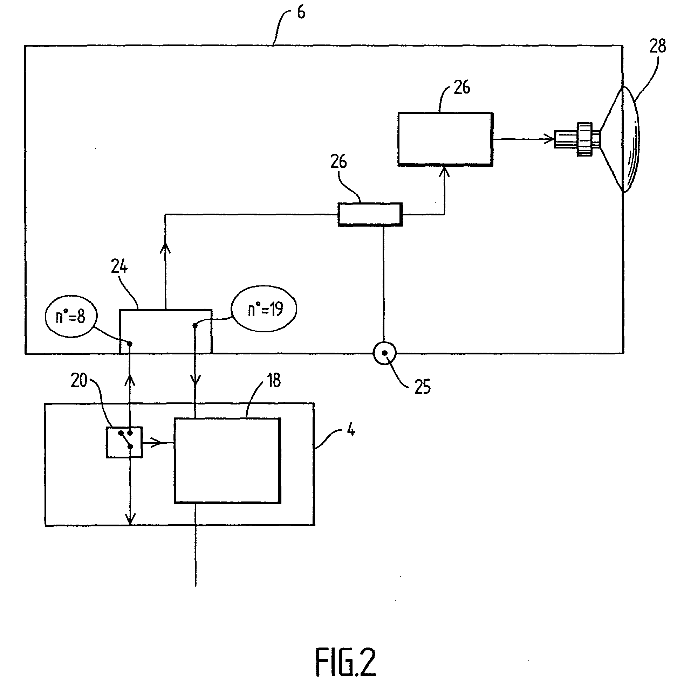

Le décodeur 4 comporte des moyens de décodage 18 et des moyens de commutation 20. Le décodeur 4 se présente sous la forme d'un boîtier, ou d'une carte, externe au dispositif de visualisation 6 et connecté à ce dernier, par l'intermédiaire d'une prise péritélévision 24 (figure 2). La prise télévision comporte une broche numéro 8 correspondant à un circuit de commutation lente et une broche numéro 19 correspondant au signal vidéo du programme en cours de visualisation, sur le dispositif de visualisation 6 équipé de cette prise péritélévision 24. Les moyens de commutation 20 sont aptes à effectuer l'ouverture ou la fermeture d'un circuit permettant l'application d'une tension de 12 V sur la broche n° 8 de la prise péritélévision 24. Le décodeur 4 gère la tension appliquée sur la broche n° 8 de la prise péritélévision 24.

Le dispositif de visualisation 6 est un téléviseur classique destiné au marché européen et fabriqué postérieurement à 1982. Il comprend un circuit intégré d'interfaçage 26. Ce circuit électronique d'interfaçage 26 est un circuit électronique de commutation et de traitement de signaux. Il est associé à la prise péritélévision 24, des moyens d'entrée 25 d'un signal vidéo extérieur (normalement branchés sur une antenne) et l'ensemble des circuits électroniques 27 transformant le signal vidéo sortant du circuit intégré d'interfaçage 26, en une image visualisée sur un tube cathodique 28 et un son diffusé par un haut-parleur. Ce circuit intégré d'interfaçage 26 permet une commutation sur le signal vidéo extérieur, et par conséquent l'interruption de la visualisation du programme reçu par la prise péritélévision 24, lorsque qu'une tension de 12 V est appliquée sur la broche n° 8 de la prise télévision 24.

Les moyens de décodage 18 extraient du signal vidéo transmis par le réseau de télédistribution, les informations correspondant à un champ d'identification de services et un champ d'adresse.

Un exemple de procédé de contrôle d'accès conforme à la présente invention et correspondant à un mode de mise en oeuvre du système de contrôle d'accès 1 décrit ci-dessus est décrit de manière détaillée ci-dessous.

Ce procédé comprend les étapes consistant à :
- établir un code confidentiel en combinant le numéro de la chambre de l'utilisateur et un nombre aléatoire ;
- à remettre ce code confidentiel à l'utilisateur lors de son enregistrement ;
- à utiliser le réseau téléphonique de la collectivité pour saisir ce code confidentiel et identifier l'usager qui le compose ;
- indiquer à cet usager, grâce au serveur vocal du système de gestion 10, le mode opératoire pour qu'il définisse le bouquet de programme auquel il souhaite accéder ;
- insérer, grâce aux moyens d'insertion 12, dans les différents signaux vidéo en entrée des moyens d'insertion 12, un champ d'identification de services, correspondant au bouquet de programmes précédemment défini, et un champ d'adresse associé à ce champ d'identification, correspondant au dispositif de visualisation 6 utilisé par l'usager ;
- moduler chaque signal vidéo, grâce aux moyens de modulation 14;
- multiplexer, grâce aux moyens de multiplexage 16, les différents signaux vidéo modulés à l'étape précédente ;
- diffuser ces signaux multiplexés sur le réseau de télédiffusion de la collectivité ;
- extraire de ces signaux, grâce à un décodeur 4, situé dans la chambre de l'usager, la valeur du champ d'adresse ;
- comparer l'adresse correspondant au décodeur 4 de l'usager, à la valeur du champ d'adresse extrait à l'étape précédente ;
- en déduire la valeur du champ d'identification de services correspondant ;
- délivrer une tension de douze volts à la broche numéro 8 de la prise péritélévision 24 du dispositif de visualisation 6, si le signal en sortie de la broche numéro 19 de cette prise péritélévision 24 ne correspond pas à un programme auquel l'usager a un accès autorisé, ou délivrer une tension nulle sur cette broche numéro 8, si au contraire le signal en sortie de la broche numéro 19 de la prise péritélévision 24 correspond à un programme auquel l'usager a un accès autorisé.

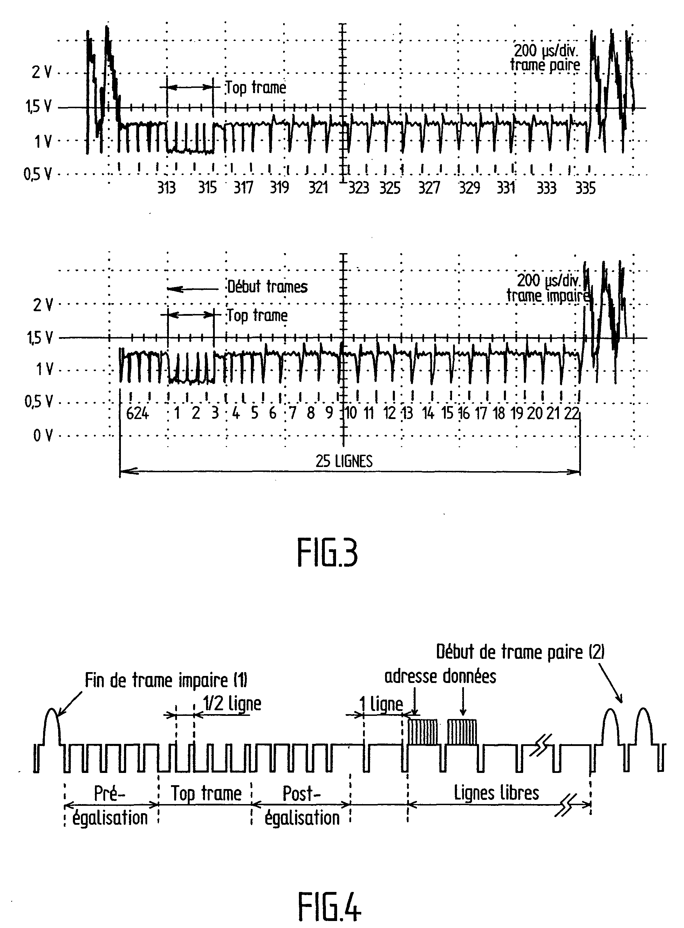

L'étape d'insertion des champs d'identification de services et d'adresse est réalisée en superposant ces champs au signal vidéo d'un programme dont on souhaite contrôler l'accès. Un tel signal vidéo comporte une partie correspondant aux informations nécessaires à la définition de la trame des lignes paires de l'image et une partie correspondant aux informations nécessaires à la définition de la trame des lignes impaires de l'image (voir figure 3). La superposition des champs d'identification de services et d'adresse est effectuée dans les lignes non utilisées pour l'image proprement dite, c'est à dire dans les lignes 7 à 22 et 320 à 335, pour les systèmes à 625 lignes par image (voir figure 4). Les champs d'identification de services et d'adresse sont insérées au niveau d'une ou plusieurs de ces lignes. Sur l'exemple illustré par la figure 4, le champ d'identification de service est inséré au niveau d'une ligne et le champ d'adresse est inséré au niveau d'une autre. Ces deux champs sont insérés après l'impulsion de synchronisation (top trame), entre les signaux des trames paire et impaire.

A titre d'exemple, les champs d'identification de services et d'adresse sont transmis en continu et par permutation cyclique des adresses des différents décodeurs 4 connectés au réseau 8. La taille du champ d'adresse est liée au nombre de décodeurs 4 connectés. La taille du champ d'identification de services est variable. Il est de un bit dans le cas d'un procédé en tout ou rien (l'accès à tous les programmes est autorisé ou non pour l'adresse correspondante). Il est de plusieurs octets dans le cas d'autorisations individualisées par programme (Pour une adresse donnée, l'accès à certains programmes est autorisé et l'accès à d'autres ne l'est pas).

Le système et le procédé décrits ci-dessus présentent les avantages suivants :
- aucun cryptage n'est nécessaire ;
- le service n'est pas interrompu pour un usager autorisé ;
- une gestion dynamique est possible, grâce au système de gestion 10 ; le service accessible à un usager peut être défini à la carte en fonction de plages horaires, de groupes de programmes, etc. ; ce service peut correspondre à un forfait, être modifié à la demande, etc. ; une période de visualisation gratuite, pour promouvoir un nouveau programme par exemple, peut être gérée par le système de gestion 10, par temporisation de la commutation avant que le service correspondant ne soit interrompu ;
- le système de contrôle 1 selon l'invention peut être mis en oeuvre sur n'importe quel téléviseur du marché européen, fabriqué depuis 1982 ;
- la confidentialité du choix de services effectué par les usagers est respecté ;
- le système de contrôle 1 peut être directement connecté au système de facturation de la collectivité.

Le prix du service facturé aux usagers de la collectivité dépend du bouquet de programmes auquel chaque usager aura souhaité accéder et/ou aura effectivement accédé, du temps d'accès, etc.

D'autres variantes du système le système de contrôle 1 et du procédé, décrits ci-dessus, peuvent être envisagées sans sortir du cadre de l'invention.

Ainsi, les champs d'identification de services et d'adresse peuvent être insérés au signal vidéo sous le format télétexte, mais en permettant à ce dernier d'être reconnu comme n'étant pas une page texte, auquel cas le décodage peut être entièrement géré par le logiciel du dispositif de visualisation 6 ; les moyens de décodage 18 peuvent être intégrés au dispositif de visualisation 6, auquel cas la fonctionnalité de la prise péritélévision 24 peut être maintenue ; les indications données à l'usager pour l'aider dans le choix des services auxquels il souhaite avoir accès et mémoriser ce choix, peuvent être fournies par un affichage en surcharge sur le dispositif de visualisation 6, plutôt que par l'intermédiaire d'un serveur vocal.

## Revendications

1. Système de contrôle d'accès, d'un utilisateur, à des programmes vidéo non cryptés visionnés sur un dispositif de visualisation (6), caractérisé par le fait qu'il comprend :
- un système de gestion (10) pour contrôler l'accès à au moins un programme vidéo, apte à définir la valeur d'un champ d'identification de services, cette valeur indiquant si l'utilisateur est autorisé à accéder à ce programme, en fonction de services sélectionnés par l'utilisateur,
- un transcodeur (2) comprenant des moyens d'insertion (12) pour insérer des informations dans un signal vidéo correspondant à un programme faisant l'objet d'un accès conditionnel, ces informations comportant le champ d'identification de services et ce transcodeur (2) comportant également des moyens d'émission pour émettre le signal vidéo porteur des informations,
- un décodeur (4) comprenant des moyens de décodage (18) pour extraire, du signal vidéo porteur des informations et émis par le transcodeur (2), la valeur du champ d'identification de services, et des moyens de commande pour contrôler la visualisation du programme, sur le dispositif de visualisation (6) du signal vidéo, en fonction de cette valeur.

2. Système de contrôle d'accès selon la revendication 1, caractérisé par le fait que le système de gestion (10) du contrôle d'accès comporte un ordinateur équipé d'un modem téléphonique et d'un serveur vocal, pour indiquer, par téléphone, à l'utilisateur comment opérer sa sélection parmi les services proposés, et mémoriser cette sélection.

3. Système de contrôle d'accès selon l'une des revendications précédentes, caractérisé par le fait qu'il comprend des moyens d'entrée pour plusieurs signaux vidéo.

4. Système de contrôle d'accès selon la revendication 3, caractérisé par le fait que les moyens d'insertion (12) sont aptes à insérer, dans chaque signal vidéo, des informations comportant un champ d'identification de services dont la valeur indique si l'utilisateur est autorisé à accéder au programme correspondant à ce signal vidéo.

5. Système de contrôle d'accès selon la revendication 4,
caractérisé par le fait qu'il comporte des moyens de modulation (14) de signal, pour moduler chaque signal vidéo porteur des informations, en sortie des moyens d'insertion (12).

6. Système de contrôle d'accès selon la revendication 5, caractérisé par le fait qu'il comporte des moyens de multiplexage (16), pour regrouper les signaux vidéo modulés grâce aux moyens de modulation (14).

7. Système de contrôle d'accès selon la revendication 6, caractérisé par le fait que les signaux vidéo regroupés par les moyens de multiplexage (16) sont transmis, par un réseau (8), à au moins un utilisateur disposant d'un décodeur (4).

8. Système de contrôle d'accès selon l'une des revendications précédentes, caractérisé par le fait que les moyens d'insertion (12) sont aptes à insérer des informations comportant en outre un champ d'adresse, pour associer un champ d'identification de services à un utilisateur déterminé.

9. Système de contrôle d'accès selon l'une des revendications précédentes, caractérisé par le fait qu'il comprend plusieurs décodeurs (4), chaque décodeur (4) étant associé à une adresse d'utilisateur.

10. Système de contrôle d'accès selon l'une des revendications précédentes, caractérisé par le fait qu'il comporte des moyens de génération d'une tension (20) apte à interrompre, par l'intermédiaire d'un circuit électronique (26) de commutation et de traitement de signaux associé à une prise péritélévision montée sur le dispositif de visualisation (6), la visualisation du programme si l'accès à celui-ci n'est pas autorisé.

11. Transcodeur pour système de contrôle d'accès, d'un utilisateur, à des programmes vidéo non cryptés visionnés sur un dispositif de visualisation (6), caractérisé par le fait qu'il comprend :
- un système de gestion (10) pour contrôler l'accès à au moins un programme vidéo, apte à définir la valeur d'un champ d'identification de services, cette valeur indiquant si l'utilisateur est autorisé à accéder à ce programme, en fonction de services sélectionnés par l'utilisateur,
- des moyens d'insertion (12) pour insérer des informations dans un signal vidéo correspondant à un programme faisant l'objet d'un accès conditionnel, ces informations comportant le champ d'identification de services et ces informations étant aptes à être décodées, par des moyens de décodage (4) aptes à extraire, du signal vidéo porteur de ces informations, la valeur du champ d'identification de services, et
- des moyens d'émission pour émettre le signal vidéo porteur des informations vers les moyens de décodage (4).

12. Transcodeur selon la revendication 11, caractérisé par le fait que le système de gestion (10) du contrôle d'accès comporte un microprocesseur, un modem téléphonique et un serveur vocal, pour indiquer, par téléphone, à l'utilisateur comment opérer sa sélection parmi les services proposés, et mémoriser cette sélection.

13. Transcodeur selon l'une des revendications 11 et 12, caractérisé par le fait qu'il comprend des moyens d'entrée pour plusieurs signaux vidéo.

14. Transcodeur selon la revendication 13, caractérisé par le fait que les moyens d'insertion (12) sont aptes à insérer, dans chaque signal vidéo, des informations comportant un champ d'identification de services dont la valeur indique si l'utilisateur est autorisé à accéder au programme correspondant à ce signal vidéo.

15. Transcodeur selon la revendication 14, caractérisé par le fait qu'il comporte des moyens de modulation (14) de signal, pour moduler chaque signal vidéo porteur des informations, en sortie des moyens d'insertion (12).

16. Transcodeur selon la revendication 15, caractérisé par le fait qu'il comporte des moyens de multiplexage (16), pour regrouper les signaux vidéo modulés grâce aux moyens de modulation (14).

17. Transcodeur selon la revendication 16, caractérisé par le fait que les signaux vidéo regroupés par les moyens de multiplexage (16) sont transmis, par un réseau, à au moins un utilisateur disposant d'un décodeur (4).

18. Transcodeur selon l'une des revendications 11 à 17, caractérisé par le fait que les moyens d'insertion (12) sont aptes à insérer des informations comportant en outre un champ d'adresse, pour associer un champ d'identification de services à un utilisateur déterminé.

19. Transcodeur selon l'une des revendications 11 à 18, caractérisé par le fait qu'il est apte à insérer les informations, dans les espaces de la trame des images du signal vidéo, qui correspondent aux lignes non utilisées pour la visualisation des images.

20. Décodeur pour système de contrôle d'accès, d'un utilisateur, à des programmes vidéo non cryptés visionnés sur un dispositif de visualisation (6), caractérisé par le fait qu'il comprend :
- des moyens de décodage (4) pour extraire, d'un signal vidéo porteur d'informations comportant un champ d'identification de services défini en fonction de services sélectionnés par l'utilisateur grâce à un système de gestion (10) permettant de contrôler l'accès à au moins un programme vidéo et ce champ d'identification de service ayant une valeur indiquant si l'utilisateur est autorisé à accéder à un programme faisant l'objet d'un accès conditionnel, cette valeur du champ d'identification de services, et
- des moyens de commande (18, 20) pour contrôler la visualisation du programme, sur le dispositif de visualisation (6) du signal vidéo, en fonction de cette valeur.

21. Décodeur selon la revendication 20, caractérisé par le fait que les moyens de commande (18, 20) comprennent des moyens générateurs (20) de tension pour produire une tension apte à interrompre, par l'intermédiaire d'un circuit électronique de commutation (26) et de traitement de signaux associé à une prise péritélévision (24) montée sur le dispositif de visualisation (6), la visualisation du programme si l'accès à celui-ci n'est pas autorisé.

22. Décodeur selon l'une des revendications 20 et 21, caractérisé par le fait que les moyens de commande (18, 20) sont électriquement reliés à un connecteur apte à être branché sur la broche numéro huit d'une prise péritélévision (24) montée sur le dispositif de visualisation (6).

23. Procédé de contrôle d'accès, d'un utilisateur, à des programmes vidéo non cryptés visionnés sur un dispositif de visualisation (6), caractérisé par le fait qu'il comprend :
- une étape consistant à définir un champ d'identification de services, dont la valeur indique si l'utilisateur est autorisé à accéder à ce programme, grâce à un système de gestion (10) permettant de contrôler l'accès à au moins un programme vidéo, en fonction des services sélectionnés par l'utilisateur,
- une étape d'insertion d'informations dans un signal vidéo correspondant à un programme faisant l'objet d'un accès conditionnel, ces informations comportant le champ d'identification de services,
- une étape d'émission du signal vidéo porteur des informations,
- une étape de décodage du signal vidéo porteur, pour extraire de ce signal, la valeur du champ d'identification de services, et
- une étape de commande pour contrôler la visualisation du programme, sur le dispositif de visualisation (6) du signal vidéo, en fonction de cette valeur.

24. Procédé de contrôle d'accès selon la revendication 23, caractérisé par le fait que l'insertion d'informations est réalisée dans les espaces de la trame des images du signal vidéo, qui correspondent aux lignes non utilisées pour la définition des images.

25. Procédé de contrôle d'accès selon la revendication 23, caractérisé par le fait que l'insertion d'informations est réalisée dans un signal destiné normalement à la transmission de données de télétexte.

26. Procédé de contrôle d'accès selon l'une des revendications 23 à 25, caractérisé par le fait qu'il comporte une étape consistant à insérer, dans le signal vidéo, avec le champ d'identification de services, un champ d'adresse, pour associer le champ d'identification de services à un utilisateur déterminé.

27. Procédé de contrôle d'accès selon l'une des revendications 23 à 26, caractérisé par le fait qu'il comporte une étape consistant à comparer la valeur du champ d'identification de services à des données sur le programme en cours de visualisation, pour déterminer si sa visualisation est autorisée.

28. Procédé de contrôle d'accès selon l'une des revendications 23 à 27, caractérisé par le fait qu'il comprend une étape consistant à produire une tension apte à interrompre, par l'intermédiaire d'un circuit électronique de commutation (26) et de traitement de signaux associé à une prise péritélévision (24) montée sur le dispositif de visualisation (6), la visualisation du programme si l'accès à celui-ci n'est pas autorisé.
